# EUROPÄISCHE PATENTSCHRIFT

(11) **EP 0 945 372 B1**
(45) Veröffentlichungstag und Bekanntmachung des Hinweises auf die Patenterteilung: **28.05.2003**
(21) Anmeldenummer: 99105607.8
(22) Anmeldetag: 19.03.1999
(51) Int. Cl.: B65G 17/32

(54) **Vorrichtung und Verfahren zum Transportieren von stückigem Produkt**
Device and method for conveying articles
Dispositif et procédé pour transporter des articles

(30) Priorität: 25.03.1998 DE 19813120
(43) Veröffentlichungstag der Anmeldung: 29.09.1999
(73) Patentinhaber: Rovema Verpackungsmaschinen GmbH, 35463 Fernwald (DE)
(72) Erfinder: Kammler, Roman Dr., 67547 Worms (DE); Lutz, Erhard, 35325 Mücke (DE); Baur, Walter Dr., 63584 Gründau (DE)

(56) Entgegenhaltungen:
- EP-A- 0 060 720
- DE-A- 19 525 115
- GB-A- 2 145 685
- US-A- 5 282 530

## Beschreibung

Die Erfindung betrifft eine Vorrichtung zum Transportieren von stückigem Produkt mit einer umlaufenden Transporteinrichtung, mindestens einem Antrieb für den Umlauf der Transporteinrichtung, und mit quer zur Transportrichtung an der Transporteinrichtung angeordneten Wänden, wobei zwischen jeweils zwei hintereinander angeordneten Wänden ein Raum für ein stückiges Produkt ausgespart ist, mit zwei zueinander parallelen Strängen, mit ineinandergreifenden Wänden, und mit einem Antrieb zum Verschieben der Wände zueinander, wobei eine Steuereinrichtung dazu vorgesehen ist, die Räume in Abhängigkeit eines Betriebszeitpunktes breiter oder schmäler einzustellen.

Bekannte Vorrichtungen dieser Art, jedoch ohne eine entsprechende Steuereinrichtung, werden an Verpackungsanlagen eingesetzt, um offene, leere Beutel als Produkt zuerst an eine Füllstation und dann an eine Verschließstation zu transportieren. Abhängig davon, welche Abmessungen die Beutel haben, wird der Abstand zwischen den Wänden durch eine relative Verschiebung der Wände zueinander entsprechend angepaßt. Das Einsetzen der leeren Beutel, der Transport, das Anhalten an einer Verpackungsstation und die Abgabe der Beutel nach deren Verschließung ist an der Vorrichtung dadurch begünstigt, dass der Abstand der Wände derart fest vorgewählt wird, dass sowohl das Einsetzen und Abgeben der Beutel, als auch das Festhalten der Beutel während eines Verpackungsvorganges in zuverlässiger Weise erreicht ist.

Aus der US 5,282,530 ist eine Vorrichtung gemäß dem Oberbegriff des Anspruchs 1 bekannt. Bei dieser Vorrichtung wird die Steuereinrichtung dazu genutzt, um die Raumbreiten zu verändern, so dass die stückigen Produkte bei größerer Raumbreite in einfacher Weise in die Räume eingesetzt werden können, und bei verringerter Raumbreite während ihres Transports relativ fest in den Räumen sitzen, so dass die Produkte ortsgenau an eine Verpackungsstation gelangen.

Zudem ist aus der EP 0 060 720 eine ähnliche Vorrichtung bekannt, bei der Kettenholme als Stränge eingesetzt werden.

Die bekannten Vorrichtungen haben den Nachteil, dass die Räume nicht quer zur Transportrichtung geändert werden können, so dass einem aufeinanderfolgendem Transport unterschiedlich tiefer Produkte nicht entsprochen werden kann.

Der Erfindung liegt die Aufgabe zugrunde, diesen Nachteil zu beseitigen.

Gelöst ist die Aufgabe mit einer Vorrichtung gemäß Anspruch 1.

Danach können die Räume auch quer zur Transportrichtung verändert werden. Mit der Steuereinrichtung kann der Abstand der Kettenholme diesbezüglich verstellt werden, wenn ein Kettenholm senkrecht zur Bewegungsrichtung des Kettenholms zur Veränderung des Abstandes der Kettenholme mittels einer Einrichtung zueinander verschiebbar ist, und die Einrichtung mit der Steuereinrichtung verbunden ist. Zwischen den Wandungen vorhandenes, stückiges Produkt kann dabei von parallel zur Transportrichtung verlaufenden, seitlichen Begrenzungen quer zur Transportrichtung begrenzt bzw. eingeklemmt werden. Für ein besonders enges Umschließen des Produkts kann auch ein Einklemmen des Produkts in zwei senkrecht zueinander verlaufenden Richtungen vorgesehen werden.

Bei der Vorrichtung werden während einer Transportbewegung der Kettenholme die Räume zwischen den Wänden derart in Transportrichtung oder senkrecht dazu begrenzt, dass das stückige Produkt fest gehalten wird, und dass während einer Unterbrechung der Transportbewegung die Räume vergrößert sind.

Es kann eine Raumveränderung ohne Montage sehr schnell und auch während des Betriebs der Vorrichtung erfolgen, um bei einem Stillstand einen relativ großen Raum für ein Produkt vorzusehen, so dass das Produkt in einfacher Weise in den Raum gesetzt oder aus diesem entnommen werden kann. Während des Weitertransportierens ist ein relativ enger Raum vorgesehen, so dass das Produkt paßgenau im Raum festsitzt und ortsgenau transportiert wird. So können die Wände des einen Kettenholms parallel zu den Wänden des anderen Kettenholms verschoben werden, um die Räume zu verändern. Diese Verschiebung erreicht, dass der Abstand der Wandabschnitte einheitlich verändert wird. Die Veränderung wird durch die Steuereinrichtung in Abhängigkeit vom Betriebszustand erreicht. Das stückige Produkt kann also für einen bestimmten Vorgang enger zwischen den Wänden und für einen anderen Vorgang, z.B. für das Einsetzen oder Herausnehmen des Produkts, mit mehr Freiraum zwischen den Wänden transportiert werden. Die Wandabstände können auch permanent vergrößert und verkleinert werden, um z.B. jeweils während eines kleinen Abstandes eine Zusatzfunktion auszuüben, bei der die Produkte festgehalten werden müssen, wie etwa das Verschweißen von Beuteln. Bei großem Abstand kann man die Produkte einzeln in die Transporteinrichtung einführen oder aus ihr herausnehmen.

Ist jeweils ein Antrieb für eine Umlaufbewegung eines Kettenholms vorgesehen (Anspruch 2), so können die Kettenholme unterschiedlich betrieben und dadurch gegeneinander verschoben werden, oder aber ein separater Antrieb neben den einzelnen Antrieben der Kettenholme wirkt nur auf einen Kettenholm und den diesen antreibenden Antrieb.

Es ist möglich, dass der Antrieb zur parallelen Verstellung der Wände einer der Antriebe für die Umlaufbewegung der Kettenholme ist (Anspruch 4). Durch einen zeitversetzten Betrieb, z.B. einen zeitversetzten Start einer Umlaufbewegung der beiden Kettenholme werden die Kettenholme und damit die Wände um die Distanz zueinander verschoben, die vom zuerst betriebenen Kettenholm innerhalb der Zeitdifferenz zurückgelegt wurde. Je nachdem, ob der eine oder der andere Kettenholm zuerst in Umlauf gesetzt wurde, kommt es zu einer Vergrößerung oder einer Verkleinerung der Abstände der Wände. Außer einer Ansteuerung des Antriebs zur parallelen Verschiebung der Wände von der Steuereinrichtung bzgl. der Schaltzeit des Antriebs ist auch eine Ansteuerung bzgl. der Drehzahl des Antriebs oder eine kombinierte Ansteuerung hinsichtlich der Schaltzeit und der Drehzahl (Anspruch 5) möglich. Der Funktionsablauf ist hierbei frei programmierbar. Während eine Ansteuerung hinsichtlich einer Einschaltzeit für einen getakteten Betrieb vorgesehen ist, können diese Ansteuerung und die Ansteuerung bzgl. der Drehzahl bei einem kontinuierlichen Betrieb vorgesehen werden. Bei einer Drehzahlansteuerung verringert oder vergrößert sich während der parallelen Umlaufbewegungen der Kettenholme der Wandabstand der alternierend von den Kettenholmen stammenden, ineinander eingreifenden Wände, je nachdem, ob der eine oder der andere Kettenholm eine größere Momentangeschwindigkeit hat.

Ist als Antrieb für die Umlaufbewegung oder die parallele Verschiebung ein Servomotor vorgesehen und ist der Antrieb mit der Steuereinrichtung verbunden (Anspruch 3), so kann die Raumveränderung durch Verstellung der Wände zueinander ohne Schrittschaltgetriebe realisiert werden. Analog zur Raumverbreiterung in Abhängigkeit des Betriebszustandes können die Räume bei einer Umstellung der Vorrichtung auf ein breiteres stückiges Produkt auf eine größere Grundbreite eingestellt werden.

Die Räume können auch mittels einer Ausgestaltung der Vorrichtung analog Anspruch 6 verstellt werden. Hierbei wirkt ein Antrieb für die Umlaufbewegung eines Kettenholms über ein Getriebe auf einen Parallelabschnitt eines Kettenholmes, und der Antrieb mitsamt dem Getriebe ist parallel zur Bewegungsrichtung des mit dem Getriebe zusammenwirkenden Teils des Kettenholmes mittels eines Antriebs zur parallelen Verstellung des Kettenholms verschiebbar. Durch die gerade Verschiebung des Antriebs für die Umlaufbewegung mit Hilfe des Antriebs zur parallelen Verstellung wird abhängig von der Betriebsart ein Kettenholm ein Stück gegenüber dem anderen Kettenholm verdreht, so dass sich die Wandabstände ändern. Diese Relatiwerschiebung kann mittels einer Spindel (Anspruch 7) erfolgen. Eine Spindel arbeitet mit relativ geringem Trägheitsmoment genau, zuverlässig und ausreichend schnell.

Bei einer Ausgestaltung der Vorrichtung gemäß Anspruch 8 kann ein Kettenholm für die Umlaufbewegung vom Antrieb zur parallelen Verstellung der Wände verschoben werden. Diese technische Lösung ist insbesondere für relativ leichte Kettenholme geeignet.

Baugleiche Kettenholme (Anspruch 9) haben den Vorteil, dass einerseits der technische Aufwand zur Herstellung der beiden Kettenholme minimiert ist. Andererseits führt eine Verstellung zu einem Ergebnis, dass unabhängig davon ist, welcher Kettenholm für eine Raumveränderung verstellt wurde.

Der Parallellauf und auch Verstellungen gegeneinander sind sehr genau, wenn analog Anspruch 10 die Antriebe elektronisch miteinander synchronisiert sind.

Als Material für die Kettenführungen hat sich Murlubric® bewährt (Anspruch 11). Dieser Kunststoff hat insbesondere eine hohe Kerbfestigkeit.

Ist die Einbringgeschwindigkeit eines stückigen Produkts in einen Raum mindestens zehnmal größer als die Geschwindigkeit der Transporteinrichtung, so sind relativ schmale Räume noch für eine schnelle Produkteinbringung geeignet und die maximale Transportgeschwindigkeit kann weiter erhöht werden.

Werden die Gegenstände, insbesondere Schlauchbeutel, in horizontaler Richtung in die Räume, oder in Faltschachteln, die sich in den Räumen befinden, eingeschoben, so ist die Einbringgeschwindigkeit unabhängig von einer Fallgeschwindigkeit erhöhbar, und es können sehr schnell Bag-in-Box-Systeme erzeugt werden.

Im folgenden wird die Erfindung anhand von Ausführungsbeispiele darstellenden Figuren näher beschrieben. Es zeigt:
- Figur 1: in einer Draufsicht einen Teil einer Vorrichtung zum Transportieren von stükkigem Produkt mit zwei separat mittels Antrieben angetriebenen, parallel zueinander angeordneten Kettenholmen, deren Wände stückiges Produkt mitnehmen; wobei ein Antrieb mit einer Steuereinrichtung zum Verstellen der Breite der zwischen den Wänden befindlichen Räume verbunden ist;
- Figur 2: in einer Draufsicht den Teil der Vorrichtung der Figur 1, jedoch mit geringfügig größerem Wandabstand, wobei der vergrößerte Wandabstand durch unterschiedlichen Betrieb der beiden ortsfesten Antriebe realisiert wurde;
- Figur 3: in einer Draufsicht einen Teil einer Vorrichtung entsprechend Figur 1, jedoch mit einem verschiebbaren Antrieb für einen Kettenholm, wobei die Verschiebung durch die Funktion einer Steuereinrichtung von einem weiteren ortsfesten Antrieb über eine Spindel erreicht wird;
- Figur 4: in einer Draufsicht den Teil der Vorrichtung der Figur 3, jedoch mit infolge der Spindelbetätigung verschobenem Antrieb mitsamt Kettenholm, sowie mit schmalerem Produkt;
- Figur 5: in einer Draufsicht eine Vorrichtung zum Transportieren von stückigem Produkt mit zwei horizontal umlaufenden Kettenholmen, und jeweils einem Antrieb an einem Umlenkrad, wobei an einem Antrieb eine Steuereinrichtung vorgesehen ist, sowie
- Figur 6: in einer Draufsicht eine Vorrichtung entsprechend Figur 5, jedoch mit einer Einrichtung zur Verschiebung eines Kettenholms parallel zur Transportrichtung, einer Einrichtung zur Verschiebung des anderen Kettenholms senkrecht zur Transportrichtung des stückigen Produkts, und mit drei Steuereinrichtungen.

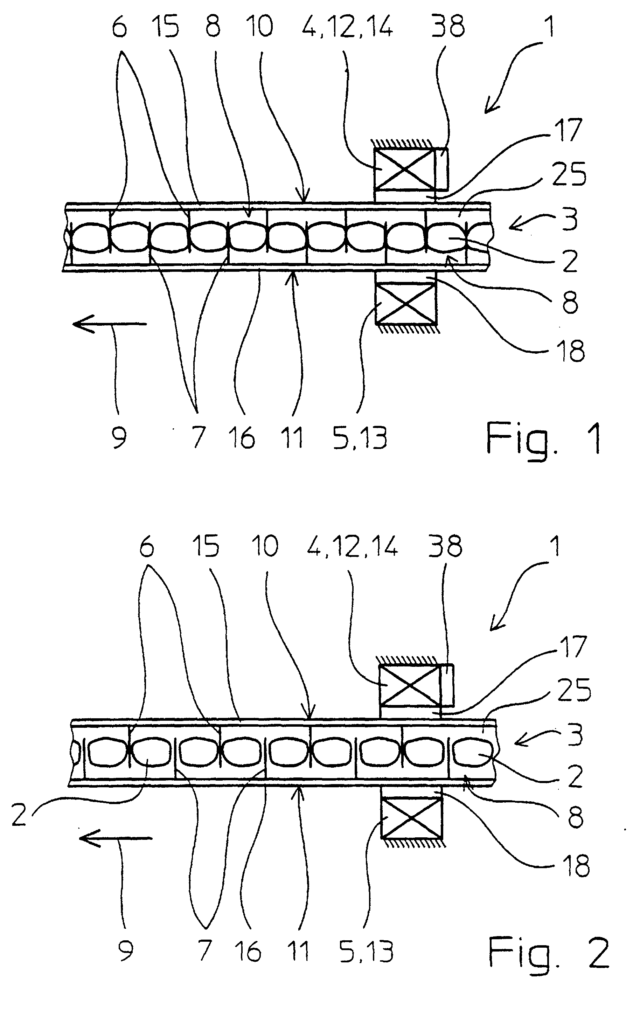

Bei einer Vorrichtung 1 zum Transportieren von stückigem Produkt 2 mit einer umlaufenden Transporteinrichtung 3, zwei Antrieben 4, 5 für den Umlauf der Transporteinrichtung 3, und mit quer zur Transportrichtung 9 angeordneten Wänden 6, 7, ist jeweils zwischen zwei hintereinander angeordneten Wänden 6, 7 ein Raum 8 für ein stückiges Produkt 2 ausgespart (Figur 1). Die Transporteinrichtung 3 besteht aus zwei separaten, parallel zueinander angeordneten Kettenholmen 10, 11, die in getakteter Weise mit Transportpausen weiterbewegt werden.. Die Wände 6 des Kettenholms 10 ragen derart in die Wände 7 des Kettenholms 11, daß eine alternierende Reihe von parallel zueinander und quer zur Transporteinrichtung 9 ausgerichteter Wände 6,7 vorliegt. Die Antriebe 4, 5 sind jeweils für eine Umlaufbewegung eines Kettenholms 10, 11 vorgesehen. Die Antriebe 4, 5 sind Servomotoren 12, 13. Der Antrieb 4 für die Umlaufbewegung des Kettenholms 10 ist gleichzeitig ein Antrieb 14 zur parallelen Verstellung der Wände 6, 7. Der Antrieb 4 zur parallelen Verstellung der Wände 6, 7 ist mittels einer Steuereinrichtung 38 bezüglich seiner Drehzahl derart angesteuert, daß er zur Verringerung des Abstandes der Wände 6, 7 bei leeren Räumen 8 für eine kurze Zeitspanne schneller dreht als der Antrieb 5, so daß der Kettenholm 10 eine Parallelverschiebung in Transportrichtung 9 gegenüber dem Kettenholm 11 erfährt. Danach kann die Vorrichtung 1 schmaleres stückiges Produkt 2 eng zwischen den Wänden 6, 7 transportieren. Bei Stillstand der Kettenholme 10, 11 werden die Wände 6, 7 geringfügig weiter voneinander entfernt (Figur 2), so daß ein leichteres Einlegen des Produkts 2 in einen Raum 8 oder ein leichteres Entfernen von Produkt 2 aus einem Raum 8 erfolgen kann. Die Steuereinrichtung 38 steuert hierzu den Antrieb 4 in Abhängigkeit des Betriebszustandes, d. h. der Taktabläufe an. Beim Bewegen der Kettenholme 10, 11 wird somit der Holm 10 in raumverengender Weise weiterbewegt, daß die Räume 8 das Produkt 2 eng fassen (Figur 1). Die Antriebe 4, 5 sind elektronisch zueinander synchronisiert. Die Kettenholme 10, 11 sind baugleich. Ein Kettenholm 10, 11 besteht jeweils im wesentlichen aus einer seitlichen Begrenzung 15, 16, an der die Wände 6, 7 äquidistant befestigt sind. Nur der ortsfeste Antrieb 4 verschiebt über sein Getriebe 17 den Kettenholm 10 relativ zum Kettenholm 11 und bewegt den Kettenholm 10 außerhalb eines Verschiebungsvorgangs gleichförmig um. Der andere Antrieb 5 bewegt lediglich außerhalb einer Raumveränderungsdauer den Kettenholm 11 über das Getriebe 18 mit der gleichen Umlaufgeschwindigkeit wie Kettenholm 10. Zur Vergrößerung des Abstandes der Wände 6, 7 dreht der Antrieb 4 für eine entsprechende Zeitspanne langsamer als der Antrieb 5, so daß der Kettenholm 10 eine Parallelverschiebung entgegen der Transportrichtung 9 gegenüber dem Kettenholm 11 erfährt.

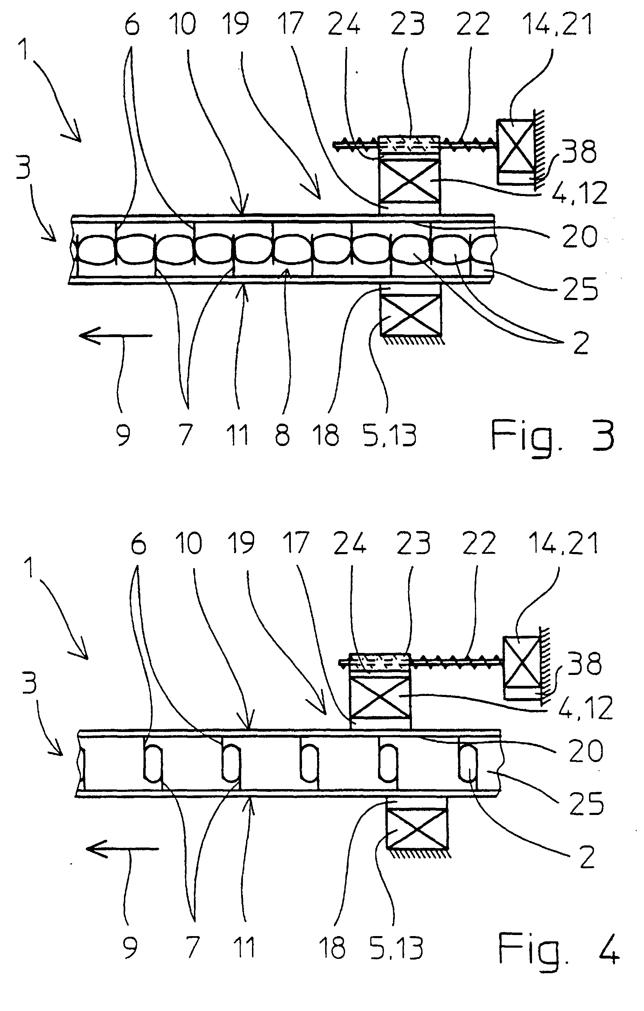

Beim Ausführungsbeispiel der Figuren 3 und 4 wirkt ein Antrieb 4 für die Umlaufbewegung eines Kettenholms 10 über ein Getriebe 17 auf einen Parallelabschnitt 19 des Kettenholms 10. Der Antrieb 4 ist mitsamt dem Getriebe 17 parallel zur Bewegungsrichtung (Transportrichtung 9) des mit dem Getriebe 17 zusammenwirkenden Teils 20 des Kettenholms 10 mittels eines Antriebs 14 zur parallelen Verstellung der Wände 6, 7 verschiebbar. Der Antrieb 14 ist ein ortsfester Servomotor 21, der von einer Steuereinrichtung 38 analog dem vorherigen Ausführungsbeispiel angesteuert wird. Der Antrieb 14 ist über eine Spindel 22 mit dem Antrieb 4 für die Umlaufbewegung verbunden und kann derart den Antrieb 4 verschieben. Der Spindelkörper 23 ist über eine Verbindung 24 starr mit dem Antrieb 4 verbunden. Während in Figur 3 der Antrieb 4 in einer Position gehalten wird, in der der Abstand der Wände 6, 7 relativ groß ist, wurde beim Zustand der Vorrichtung 1 gemäß Figur 4 durch einen kurzzeitigen Betrieb des Antriebs 14 die Spindel 22 gedreht, und dabei der Spindelkörper 23 mitsamt der Verbindung 24, dem Antrieb 4, dem Getriebe 17 und dem gesamten Kettenholm 10 nach links verschoben, um eine Anspassung der Räume 8 auf kleinere Produkte 2 zu erreichen. Die transportierten Produkte 2 gleiten entlang einer Gleitbahn 25 (ebenso beim Ausführungsbeispiel der Figuren 1 und 2).

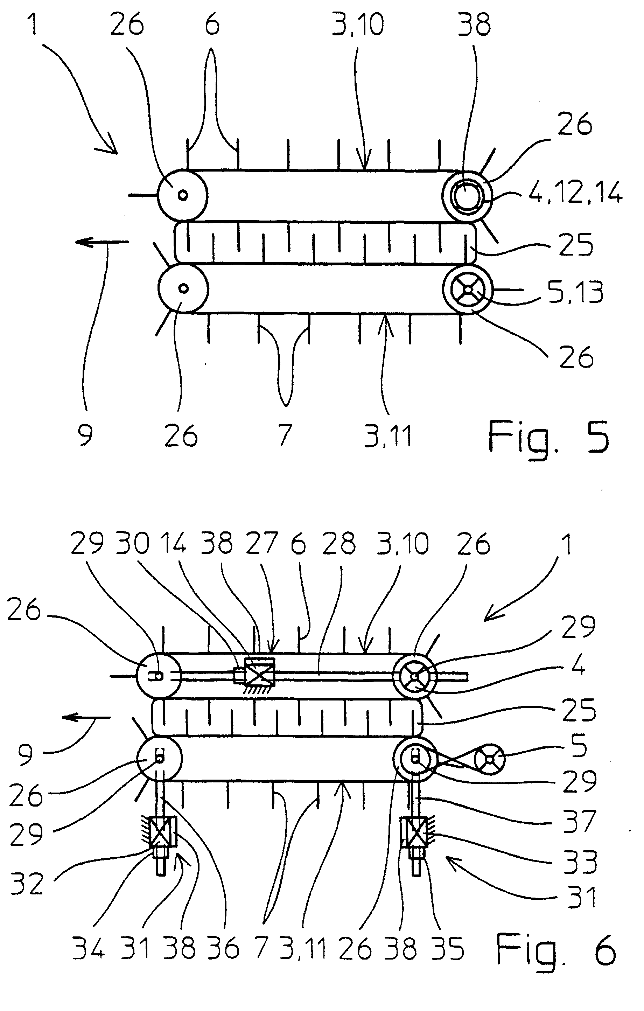

Beim Ausführungsbeispiel der Figur 5 sind die Antriebe 4, 5 an jeweils einem Umlenkrad 26 eines umlaufenden Kettenholms 10, 11 angeordnet und treiben die Umlenkräder 26 axial an. Der Antrieb 4 für die Umlaufbewegung des Kettenholms 10 ist gleichzeitig ein Antrieb 14 für das Verstellen der Wände 6, 7 zueinander. Eine Verstellung wird derart realisiert, daß der Antrieb 14 durch die Funktion der Steuereinrichtung 38 zeitversetzt zum Antrieb 5 bei einem Taktstillstand angehalten wird.

Bei einem weiteren Ausführungsbeispiel (Figur 6) ist der Kettenholm 10 mitsamt seinem Antrieb 4 von einem Antrieb 14 zur parallelen Verstellung der Wände 6, 7 verschiebbar. Der Antrieb 14 ist Teil einer Einrichtung 27 zum Verschieben des Kettenholms 10 parallel zur Transportrichtung 9. Die Einrichtung 27 weist eine Zahnstange 28 auf, die mit den Achsen 29 der Umlaufräder 26 verbunden ist, und auf die der ortsfeste Antrieb 14 mit seinem Getriebe 30 wirkt. Der zweite Kettenholm 11 ist senkrecht zur Bewegungsrichtung des Kettenholms zwecks Veränderung des Abstandes der Kettenholme 10, 11 und damit der Räume 8 in dieser Richtung mittels einer Einrichtung 31 zum Verschieben verschiebbar. Die Einrichtung 31 zum Verschieben besteht im Wesentlichen aus den Antrieben 32, 33, die jeweils über ein Getriebe 34, 35 mittels einer Zahnstange 36, 37 auf eine Achse 29 eines Umlenkrades 26 wirken. Die Antriebe 32, 33 werden synchron zueinander betrieben und verstellen derart den Abstand der Kettenholme 10, 11 entsprechend dem Betriebszustand. Drei Steuereinrichtungen 38 sorgen für eine Raumvergrößerung sowohl parallel als auch senkrecht zur Transportrichtung 9.

Es ist auch möglich, die Produkte 2 während eines Bearbeitungsvorganges, z. B. während eines Verschweißens eines gefüllten Produktbeutels, eng im Raum 8 zu halten, und sie dann während eines weiteren Vorgangs, z. B. dem Einsetzen in die Räume 8 durch eine Raumvergrößerung mit genügend Freiraum in den Räumen 8 zu begrenzen.
- 1: Vorrichtung
- 2: Produkt
- 3: Transporteinrichtung
- 4, 5: Antrieb
- 6, 7: Wand
- 8: Raum
- 9: Transportrichtung
- 10, 11: Kettenholm
- 12, 13: Servomotor
- 14: Antrieb
- 15, 16: Begrenzung
- 17, 18: Getriebe
- 19: Parallelabschnitt
- 20: zusammenwirkendes Teil
- 21: Servomotor
- 22: Spindel
- 23: Spindelkörper
- 24: Verbindung
- 25: Gleitbahn
- 26: Umlenkrad
- 27: Einrichtung zum Verschieben
- 28: Zahnstange
- 29: Achse
- 30: Getriebe
- 31: Einrichtung zum Verschieben
- 32, 33: Antrieb
- 34, 35: Getriebe
- 36, 37: Zahnstange
- 38: Steuereinrichtung

## Patentansprüche

1. Vorrichtung zum Transportieren von stückigem Produkt (12) mit einer umlaufenden Transporteinrichtung (3), mindestens einem Antrieb (4, 5) für den Umlauf der Transporteinrichtung (3) und mit quer zur Transportrichtung (9) an der Transporteinrichtung (3) angeordneten Wänden (6, 7), wobei zwischen jeweils zwei hintereinander angeordneten Wänden (6, 7) ein Raum (8) für ein stückiges Produkt (2) ausgespart ist, die Transporteinrichtung (3) aus zwei separaten, parallel zueinander angeordneten Strängen mit auf die Stränge zu ausgerichteten Wänden (6, 7) besteht, die Wände (6, 7) der beiden Stränge (10, 11) alternierend ineinandergreifen, und mindestens ein Antrieb (14) zur Verschiebung der Wände (6, 7) zueinander vorgesehen ist, wobei eine Steuereinrichtung (38) vorgesehen ist, mittels der die Räume (8) abhängig vom Betriebszeitpunkt breiter oder schmäler eingestellt werden können, **dadurch gekennzeichnet, dass** die Stränge als Kettenholme (10, 11) ausgeführt sind, dass ein Kettenholm (11) senkrecht zur Bewegungsrichtung des Kettenholms (11) zur Veränderung des Abstandes der Kettenholme (10, 11) zueinander mittels einer Einrichtung (31) zum Verschieben verschiebbar ist, und dass die Einrichtung (31) mit der Steuereinrichtung (38) verbunden ist.

2. Vorrichtung nach Anspruch 1, **dadurch gekennzeichnet, dass** jeweils ein Antrieb (4,5) für eine Umlaufbewegung eines Kettenholms (10, 11) vorgesehen ist.

3. Vorrichtung nach Anspruch 1 oder Anspruch 2, **dadurch gekennzeichnet, dass** als Antrieb (4, 5, 14) ein Servomotor (12, 13, 21) vorgesehen ist.

4. Vorrichtung nach Anspruch 2, **dadurch gekennzeichnet, dass** der Antrieb (14) zur parallelen Verstellung der Wände (6, 7) einer der Antriebe (4) für die Umlaufbewegung eines Kettenholmes (10) ist, und dass der Antrieb (14) mit der Steuereinrichtung (38) verbunden ist.

5. Vorrichtung nach Anspruch 4, **dadurch gekennzeichnet, dass** der Antrieb (4) zur parallelen Verstellung der Wände (6, 7) bzgl. seiner Drehzahl und/oder seiner Schaltzeit von der Steuereinrichtung (38) ansteuerbar ist.

6. Vorrichtung nach Anspruch 1, **dadurch gekennzeichnet, dass** ein Antrieb (4) für die Umlaufbewegung eines Kettenholms (10) über ein Getriebe (17) auf einen Parallelabschnitt (19) des Kettenholmes (10) wirkt, und dass der Antrieb (4) mitsamt dem Getriebe (17) parallel zur Bewegungsrichtung des mit dem Getriebe (17) zusammenwirkenden Teils (20) des Kettenholms (10) mittels eines Antriebs (14) zur parallelen Verstellung der Wände (6, 7, 10) verschiebbar ist.

7. Vorrichtung nach Anspruch 1 oder Anspruch 6, **dadurch gekennzeichnet, dass** der Antrieb (14) zur parallelen Verstellung der Wände (6, 7) über eine Spindel (22) mit dem Antrieb (4) für die Umlaufbewegung verbunden ist.

8. Vorrichtung nach Anspruch 1, Anspruch 2 oder Anspruch 7, **dadurch gekennzeichnet, dass** ein Kettenholm (10) für die Umlaufbewegung vom Antrieb (14) zur parallelen Verstellung der Wände (6, 7) verschiebbar ist.

9. Vorrichtung nach Anspruch 1, **dadurch gekennzeichnet, dass** die Kettenholme (10, 11) baugleich ausgestaltet sind.

10. Vorrichtung nach Anspruch 1, **dadurch gekennzeichnet, dass** die Antriebe (4, 5, 14) zeitweise elektronisch miteinander synchronisiert sind.

11. Vorrichtung nach Anspruch 1, **dadurch gekennzeichnet, dass** Kettenführungen aus Murlubric® vorgesehen sind.

## Claims

1. A device for conveying piece articles (12), having a rotating conveying device (3), having at least one drive (4, 5) for the rotation of the conveying device (3) and having walls (6, 7) arranged on the conveying device (3) transversely to the conveying direction (9), wherein a respective space (8) for a piece article (2) is formed in each case between two walls (6, 7) arranged one behind the other, the conveying device (3) comprises two separate lines arranged parallel to each other and having walls (6, 7) orientated with respect to the lines, the walls (6, 7) of the two lines (10, 11) engage in each other in an alternating manner, and at least one drive (14) is provided in order to displace the walls (6, 7) with respect to each other, wherein a control device (38) is provided by means of which the spaces (8) can be set to be wider or narrower depending upon the moment of operation, **characterized in that** the lines are constructed in the form of chain strands (10, 11), one chain strand (11) is displaceable at a right angle to the direction of movement of the chain strand (11) in order to change the distance between the chain strands (10, 11) from each other by means of a device (31) for displacement, and the device (31) is connected to the control device (38).

2. A device according to Claim 1, **characterized in that one** respective drive (4, 5) is provided in each case for a rotational movement of a chain strand (10, 11).

3. A device according to Claim 1 or Claim 2, **characterized in that** a servo motor (12, 13, 21) is provided as the drive (4, 5, 14).

4. A device according to Claim 2, **characterized in that** the drive (14) for the parallel displacement of the walls (6, 7) is one of the drives (4) for the rotational movement of a chain strand (10), and the drive (14) is connected to the control device (38).

5. A device according to Claim 4, **characterized in that** the drive (4) for the parallel displacement of the walls (6, 7) can be controlled with respect to its rotational speed and/or its switching time by the control device (38).

6. A device according to Claim 1, **characterized in that** a drive (4) for the rotational movement of a chain strand (10) acts upon a parallel portion (19) of the chain strand (10) by way of a gearing (17), and the drive (4) together with the gearing (17) is displaceable by means of a drive (14) for the parallel displacement of the walls (6, 7, 10) parallel to the direction of movement of the part (20) of the chain strand (10) co-operating with the gearing (17).

7. A device according to Claim 1 or Claim 6, **characterized in that** the drive (14) for the parallel displacement of the walls (6, 7) is connected by way of a spindle (22) to the drive (4) for the rotational movement.

8. A device according to Claim 1, Claim 2 or Claim 7, **characterized in that** a chain strand (10) for the rotational movement is displaceable by the drive (14) for the parallel displacement of the walls (6, 7).

9. A device according to Claim 1, **characterized in that** the chain strands (10, 11) are designed so as to be structurally identical.

10. A device according to Claim 1, **characterized in that** the drives (4, 5, 14) are electronically synchronized with one another time-wise.

11. A device according to Claim 1, **characterized in that** chain guides of Murlubric® are provided.

## Revendications

1. Dispositif pour transporter un produit (12) en morceaux, comportant un dispositif de transport (3) tournant, au moins un dispositif d'entraînement (4, 5) pour la rotation du dispositif de transport (3) et comportant des parois (6, 7) disposées transversalement à la direction de transport (9) sur le dispositif de transport (3), un espace (8) pour un produit (2) en morceaux étant ménagé entre deux parois (6, 7) disposées l'une derrière l'autre, le dispositif de transport (3) étant constitué de deux lignes séparées, disposées parallèlement l'une à l'autre avec des parois (6, 7) orientées vers les lignes, les parois (6, 7) des deux lignes (10, 11) s'engageant alternativement l'une dans l'autre, et au moins un dispositif d'entraînement (14) étant prévu pour le coulissement des parois (6, 7) l'une par rapport à l'autre, un dispositif de commande (38) étant prévu au moyen duquel les espaces (8) peuvent être réglés plus larges ou plus étroits en fonction de l'instant de commande, **caractérisé en ce que** les lignes sont réalisées sous la forme de longerons de chaîne (10, 11), **en ce qu'**un longeron de chaîne (11) peut coulisser perpendiculairement à la direction de déplacement du longeron de chaîne (11) pour faire varier la distance des longerons de chaîne (10, 11) l'un par rapport à l'autre, au moyen d'un dispositif (31) de coulissement, et **en ce que** le dispositif (31) est relié au dispositif de commande (38).

2. Dispositif selon la revendication 1, **caractérisé en ce qu'**un dispositif d'entraînement (4, 5) est prévu pour un mouvement de rotation d'un longeron de chaîne (10, 11).

3. Dispositif selon la revendication 1 ou 2, **caractérisé en ce qu'**un servomoteur (12, 13, 21) est prévu comme dispositif d'entraînement (4, 5, 14).

4. Dispositif selon la revendication 2, **caractérisé en ce que** le dispositif d'entraînement (14) pour le déplacement parallèle des parois (6, 7) est l'un des dispositifs d'entraînement (4) du mouvement de rotation d'un longeron de chaîne (10), et **en ce que** le dispositif d'entraînement (14) est relié au dispositif de commande (38).

5. Dispositif selon la revendication 4, **caractérisé en ce que** le dispositif d'entraînement (4) pour le déplacement parallèle des parois (6, 7) peut être commandé en ce qui concerne sa vitesse de rotation et/ou son temps de commutation, par le dispositif de commande (38).

6. Dispositif selon la revendication 1, **caractérisé en ce qu'**un dispositif d'entraînement (4) pour le mouvement de rotation d'un longeron de chaîne (10) agit, par l'intermédiaire d'une transmission (17), sur un tronçon parallèle (19) du longeron de chaîne (10), et **en ce que** le dispositif d'entraînement (4) peut coulisser avec la transmission (17), parallèlement à la direction de déplacement de la partie (20) coopérant avec la transmission (17), du longeron de chaîne (10), au moyen d'un dispositif d'entraînement (14) du déplacement parallèle des parois (6, 7, 10).

7. Dispositif selon la revendication 1 ou la revendication 6, **caractérisé en ce que** le dispositif d'entraînement (14) pour le déplacement parallèle des parois (6, 7) est relié, par l'intermédiaire d'une broche (22), au dispositif d'entraînement (4) du mouvement de rotation.

8. Dispositif selon la revendication 1, la revendication 2 ou la revendication 7, **caractérisé en ce que** le dispositif d'entraînement (4) du déplacement parallèle des parois (6, 7) peut faire coulisser un longeron de chaîne (10) pour le mouvement de rotation.

9. Dispositif selon la revendication 1, **caractérisé en ce que** les longerons de chaîne (10, 11) ont une construction identique.

10. Dispositif selon la revendication 1, **caractérisé en ce que** les dispositifs d'entraînement (4, 5, 14) sont synchronisés entre eux électroniquement dans le temps.

11. Dispositif selon la revendication 1, **caractérisé en ce que** des guides de chaîne en Murlubric® sont prévus.
